(19)

Europäisches
Patentamt
European
Patent Office
Office européen
des brevets

(11)     EP 3 702 095 A1

(12)     **EUROPEAN PATENT APPLICATION**
published in accordance with Art. 153(4) EPC

(43) Date of publication:
**02.09.2020   Bulletin 2020/36**

(21) Application number: **18870307.8**

(22) Date of filing: **24.10.2018**

(51) Int Cl.:
*B23K 35/368* [(2006.01)]     *B23K 35/30* [(2006.01)]
*B23K 35/362* [(2006.01)]     *C22C 38/00* [(2006.01)]
*C22C 38/04* [(2006.01)]

(86) International application number:
**PCT/JP2018/039568**

(87) International publication number:
**WO 2019/082945 (02.05.2019 Gazette 2019/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2017   JP 2017206521**

(71) Applicant: **Kabushiki Kaisha Kobe Seiko Sho
(Kobe Steel, Ltd.)
Kobe-shi, Hyogo 651-8585 (JP)**

(72) Inventors:
• **NAGAMI Masayuki**
  **Kanagawa 251-8551 (JP)**
• **SASAKURA Shuji**
  **Kanagawa 251-8551 (JP)**

(74) Representative: **Müller-Boré & Partner
Patentanwälte PartG mbB
Friedenheimer Brücke 21
80639 München (DE)**

(54)     **FLUX-CORED WIRE FOR SUBMERGED ARC WELDING, AND MATERIAL FOR SUBMERGED
ARC WELDING**

(57)     The purpose of the present invention is to provide a flux-cored wire for submerged arc welding, and a material for submerged arc welding, with which it is possible to obtain a welded metal having exceptional strength and extreme-low-temperature toughness by exceptional welding activity and to suppress the amount of diffusible hydrogen in the welded metal. The present invention pertains to a flux-cored wire for submerged arc welding in which the interior of a steel outer layer is filled with flux, the flux-cored wire containing prescribed quantities of each of C, Si, Mn, Ni, Ti, B, $CaF_2$, and Mg in relation to the total mass of the wire, and the amounts of each of N and O in the outer layer being restricted so as to be equal to or less than a prescribed value.

EP 3 702 095 A1

## Description

Technical Field

The present invention relates to a flux-cored wire for submerged arc welding and a material for submerged arc welding.

Background Art

Existing oil and gas fields have been depleted in recent years and therefore, it is expected that drilling and production bases for oil and gas fields will move in the future to frigid regions, such as the Arctic Circle. In drilling facilities in frigid regions, it is considered to be particularly important to ensure safety against brittle failure.

In order to improve the low-temperature toughness of a weld metal, for example, it is conceivable to reduce the amount of oxygen in the weld metal. In submerged arc welding, a solid wire is usually used. However, there is a limit in achieving a reduction in the amount of oxygen by adjusting the wire and a flux for submerged arc welding, and there is a problem in that welding workability deteriorates.

On the other hand, in submerged arc welding, a flux-cored wire is also used. For example, Patent Literature 1 discloses a flux-cored wire in which by optimizing the amounts of metallic Mg or Mg alloy and $BaF_2$ added in the wire, strength and low-temperature toughness are improved with excellent welding workability.

Citation List

Patent Literature

PTL 1: Japanese Patent No. 5462147

Summary of Invention

Technical Problem

Regarding the low-temperature toughness, properties in a very low temperature region may be required in some cases. In submerged arc welding with relatively high heat input, it is difficult to ensure good impact performance in a very low temperature region, for example, at -90°C, and thus there are still problems in improving low-temperature toughness. For example, in the technique described in Patent Literature 1, toughness at about -18°C only is evaluated, and the low-temperature toughness in the very low temperature region as described above is unknown. Therefore, it is required to sufficiently secure improvement of toughness even in the very low temperature region.

The present invention has been made under the circumstances described above. It is an object of the invention to provide a flux-cored wire for submerged arc welding and a material for submerged arc welding, with which it is possible to obtain a weld metal having high strength and excellent low-temperature toughness in a very low temperature region with excellent welding workability and to suppress to a low level the amount of diffusible hydrogen in the weld metal.

Solution to Problem

A flux-cored wire for submerged arc welding according to an aspect of the present invention is a flux-cored wire for submerged arc welding in which a steel sheath is filled with a flux, the flux-cored wire including, relative to a total mass of the wire, C: 0.03 to 0.15% by mass, Si: 0.05 to 0.50% by mass, Mn: 0.80 to 2.00% by mass, Ni: 1.5 to 4.0% by mass, Ti: 0.05 to 0.30% by mass, B: 0.003 to 0.015% by mass, $CaF_2$: 0.8 to 2.5% by mass, and Mg: 1.0% by mass or less (including 0% by mass), in which the amount of N and the amount of O in the steel sheath are controlled to N: 0.0050% by mass or less and O: 0.0075% by mass or less, respectively.

The flux-cored wire for submerged arc welding may further include, relative to the total mass of the wire, at least one selected from the group consisting of Cr: 1.5% by mass or less (including 0% by mass), Mo: 1.5% by mass or less (including 0% by mass), and Cu: 1.5% by mass or less (including 0% by mass).

A material for submerged arc welding according to another aspect of the present invention includes the flux-cored wire for submerged arc welding and a sintered flux having a basicity of 1.5 to 4.0.

Advantageous Effects of Invention

By using the flux-cored wire for submerged arc welding or the material for submerged arc welding according to the aspect of the present invention, it is possible to obtain a weld metal having high strength and excellent low-temperature toughness in a very low temperature region with excellent welding workability. Furthermore, the amount of diffusible hydrogen in the weld metal can be suppressed to a low level. Brief Description of Drawings

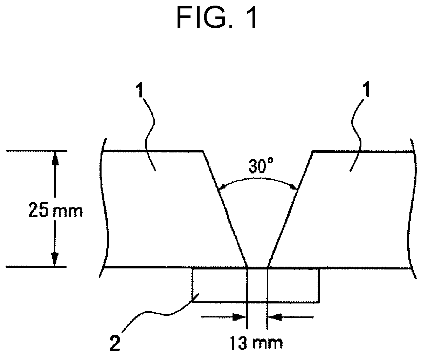

[Fig. 1] Fig. 1 is a schematic diagram showing a groove shape of a steel sheet used in tests in Examples.

Description of Embodiments

Embodiments for carrying out the present invention will be described in detail below. However, the present invention is not limited to the embodiments described below, and can be arbitrarily modified and implemented without departing from the gist of the present invention.

In the present description, "to" indicating a numerical range is used, meaning that the numerical values described before and after that are included as the lower limit value and the upper limit value.

[Flux-cored wire for submerged arc welding]

A flux-cored wire for submerged arc welding (hereinafter, may be simply referred to as a "flux-cored wire" or "wire") according to an embodiment of the present invention is a flux-cored wire for submerged arc welding in which a steel sheath is filled with a flux, the flux-cored wire including, relative to a total mass of the wire, C: 0.03 to 0.15% by mass, Si: 0.05 to 0.50% by mass, Mn: 0.80 to 2.00% by mass, Ni: 1.5 to 4.0% by mass, Ti: 0.05 to 0.30% by mass, B: 0.003 to 0.015% by mass, $CaF_2$: 0.8 to 2.5% by mass, and Mg: 1.0% by mass or less (including 0% by mass), in which the amount of N and the amount of O in the steel sheath are controlled to N: 0.0050% by mass or less and O: 0.0075% by mass or less, respectively. The flux-cored wire according to the embodiment is a metal-based flux-cored wire.

In the flux-cored wire, a steel sheath is filled with a flux. In detail, the flux-cored wire according to the embodiment includes a steel sheath having a tubular shape and a flux filled inside (in the inner side of) the sheath.

Note that the flux-cored wire may be a seamless type in which the sheath does not have a seam or a seam type in which the sheath has a seam. Furthermore, in the flux-cored wire, a surface of the wire (outer side of the sheath) may be subjected or not subjected to plating or the like.

The reasons for numerical limitations on the amounts of the components contained in the flux-cored wire according to the embodiment will be described below. Note that hereinafter, the amounts of the components in the flux-cored wire are defined as the contents relative to the total mass of the wire (total of the steel sheath and the flux inside the sheath), unless otherwise specified.

(C: 0.03 to 0.15% by mass)

C is an element that greatly affects the hardenability of the weld metal and plays an important role in securing strength and toughness. In order to sufficiently obtain such an effect, the amount of C in the wire is set to be 0.03% by mass or more, and preferably 0.04% by mass or more. On the other hand, when C is excessively incorporated, there is a concern that the strength may become excessive and the toughness may be deteriorated. Therefore, the amount of C in the wire is set to be 0.15% by mass or less, and preferably 0.10% by mass or less.

(Si: 0.05 to 0.50% by mass)

Si is an element that has effects of enhancing resistance to pockmarks and improving weld bead wettability. In order to sufficiently obtain such effects, the amount of Si in the wire is set to be 0.05% by mass or more, and preferably 0.10% by mass or more. On the other hand, when Si is excessively incorporated, ferrite in the weld metal is coarsened, which may deteriorate toughness. Therefore, the amount of Si in the wire is set to be 0.50% by mass or less, and preferably 0.40% by mass or less.

(Mn: 0.80 to 2.00% by mass)

Mn is an element that greatly affects the hardenability of the weld metal and plays an important role in securing strength and toughness. In order to sufficiently obtain such an effect, the amount of Mn in the wire is set to be 0.80% by mass or more, and preferably 1.00% by mass or more. On the other hand, when Mn is excessively incorporated, there is a concern that the strength may become excessive and the toughness may be deteriorated. Therefore, the amount of Mn in the wire is set to be 2.00% by mass or less, and preferably 1.70% by mass or less.

(Ni: 1.5 to 4.0% by mass)

Ni is an element that has an effect of toughening the matrix in the weld metal.

In order to sufficiently obtain such an effect, the amount of Ni in the wire is set to be 1.5% by mass or more, and preferably 2.0% by mass or more. On the other hand, when the amount of Ni becomes excessive, there is a concern that the strength may become excessive and the toughness may be deteriorated. Therefore, the amount of Ni in the wire is set to be 4.0% by mass or less, and preferably 3.5% by mass or less.

(Ti: 0.05 to 0.30% by mass)

Ti has effects of improving the hardenability of the weld metal, refining the structure of the weld metal, and improving toughness. In order to sufficiently obtain such effects, the amount of Ti in the wire is set to be 0.05% by mass or more, 0.10% by mass or more. On the other hand, when the amount of Ti becomes excessive, there is a concern that the strength may become excessive and the toughness may be deteriorated. Therefore, the amount of Ti in the wire is set to be 0.30% by mass or less, and preferably 0.25% by mass or less.

(B: 0.003 to 0.015% by mass)

B has effects of refining the structure of the weld metal and improving toughness. In order to sufficiently obtain such effects, the amount of B in the wire is set to be 0.003% by mass or more, and preferably 0.006% by mass or more. On the other hand, when the amount of B becomes excessive, there is a concern that the strength may become excessive and the toughness may be deteriorated. Therefore, the amount of B in the wire is set to be 0.015% by mass or less, and preferably 0.012% by mass or less.

($CaF_2$: 0.8 to 2.5% by mass)

$CaF_2$ has effects of promoting deoxidation of the weld metal and improving the toughness of the weld metal. In order to sufficiently obtain such effects, the amount of $CaF_2$ in the wire is set to be 0.8% by mass or more, and preferably 1.2% by mass or more. On the other hand, when the amount of $CaF_2$ becomes excessive, there is a concern that the arc may become unstable and the bead shape may be poor. Therefore, the amount of $CaF_2$ in the wire is set to be 2.5% by mass or less, and preferably 2.1% by mass or less.

(Mg: 1.0% by mass or less (including 0% by mass))

Mg is an element that has an effect of promoting deoxidation of the weld metal. However, when the amount of Mg becomes excessive, there is a concern that the amount of diffusible hydrogen in the weld metal may increase and cold cracking susceptibility may be increased. Therefore, the amount of Mg in the wire is set to be 1.0% by mass or less, and preferably 0.4% by mass or less. The lower limit value of the Mg content is not particularly limited, and may be 0% by mass or, for example, 0.1% by mass.

Furthermore, the flux-cored wire according to the embodiment may further include, in addition to the components described above, a predetermined amount of at least one component selected from Cr, Mo, and Cu described below.

(Cr: 1.5% by mass or less (including 0% by mass))

Although not an essential component, Cr may be incorporated since it exerts an effect of improving the strength of the weld metal. When Cr is added to the wire, the upper limit of the content thereof is preferably 1.5% by mass. The amount of Cr in the wire is more preferably 0.7% by mass or less. When Cr is incorporated, the lower limit of the content thereof is not particularly limited, and may be 0% by mass or, for example, 0.2% by mass.

(Mo: 1.5% by mass or less (including 0% by mass))

Although not an essential component, Mo may be incorporated since it exerts an effect of improving the strength of the weld metal. When Mo is added to the wire, the upper limit of the content thereof is preferably 1.5% by mass. The amount of Mo in the wire is more preferably 0.7% by mass or less. When Mo is incorporated, the lower limit of the content thereof is not particularly limited, and may be 0% by mass or, for example, 0.2% by mass.

(Cu: 1.5% by mass or less (including 0% by mass))

Although not an essential component, Cu may be incorporated since it exerts an effect of improving the strength of the weld metal. When Cu is added to the wire, the upper limit of the content thereof is preferably 1.5% by mass. The amount of Cu in the wire is more preferably 0.5% by mass or less. When Cu is incorporated, the lower limit of the content thereof is not particularly limited, and may be 0% by mass or, for example, 0.2% by mass.

Furthermore, the wire according to the embodiment may be subjected to Cu plating as desired. Here, in the case where the wire is subjected to Cu plating, the amount of Cu is a total amount of Cu contained in the base material of the wire and Cu contained in the Cu plating.

(Balance)

The balance of the flux-cored wire according to the embodiment includes Fe, unavoidable impurities, and the like.

Fe as the balance corresponds to Fe constituting the sheath, iron powder added to the flux, and Fe of alloy powder.

The unavoidable impurities as the balance correspond to components other than the components described above (P: 0.02% by mass or less, S: 0.02% by mass or less, Sn: 0.02% by mass or less, Pb: 0.02% by mass or less, Sb: 0.02% by mass or less, Nb: 0.05% by mass or less, V: 0.05% by mass or less, etc.) and the above-described selectively added components (Cr, Mo, and Cu), etc. which are unavoidably included. Inclusion of the unavoidable impurities is allowed within a range that does not hinder the advantageous effects of the flux-cored wire according to the embodiment. The flux-cored wire according to the embodiment is a metal-based flux-cored wire, but may include a slag forming agent and an arc stabilizer within a range that does not hinder the advantageous effects. Note that a slag forming agent and an arc stabilizer are preferably not included.

Furthermore, in the flux-cored wire according to the embodiment, the amount of N and the amount of O in the steel sheath (relative to the total mass of the steel sheath) are controlled within predetermined ranges. The reasons therefor will be described below.

(N: 0.0050% by mass or less)

When the amount of N in the steel sheath exceeds 0.0050% by mass, bubbles are likely to be generated in the weld metal, and there is a concern that the toughness of the weld metal may be deteriorated. Therefore, in the wire according to the embodiment, the amount of N in the steel sheath is set to be 0.0050% by mass or less, and preferably 0.0040% by mass or less. The lower limit of the amount of N is not particularly limited, but is, for example, 0.0020% by mass or more from the practical viewpoint.

(O: 0.0075% by mass or less)

When the amount of O in the steel sheath exceeds 0.0075% by mass, blowholes are likely to be generated in the weld metal, and there is a concern that the amount of oxygen in the weld metal may be increased, resulting in deterioration in the toughness of the weld metal. Therefore, in the wire according to the embodiment, the amount of O in the steel sheath is set to be 0.0075% by mass or less, and preferably 0.0060% by mass or less. The lower limit of the amount of O is not particularly limited, but is, for example, 0.0030% by mass or more from the practical viewpoint.

In the flux-cored wire according to the embodiment, in order to improve toughness in a very low temperature region, the amount of N and the amount of O in the sheath are controlled to the above-described specified values or less.

Next, one example of a method of manufacturing a flux-cored wire according to the embodiment will be described. However, the present invention is not limited thereto.

In one example of a method of manufacturing a flux-cored wire according to the embodiment, first, a steel sheath is filled with a flux. At that time, the composition and filling ratio of the flux can be appropriately adjusted depending on the composition, thickness, and the like of the sheath so that the composition of the whole wire is within the ranges described above.

Subsequently, the wire in which the sheath has been filled with the flux is drawn using hole dies or roller dies to reduce the diameter, thus obtaining a flux-cored wire having a predetermined outer diameter.

The outer diameter of the flux-cored wire according to the embodiment is not particularly limited, but is preferably 1.6 to 4.8 mm, and more preferably 2.4 to 4.0 mm, from the standpoint of wire feed stability.

[Material for submerged arc welding]

Next, a material for submerged arc welding according to an embodiment of the present invention will be described.

The material for submerged arc welding according to the embodiment includes a combination of the above-described flux-cored wire for submerged arc welding and a sintered flux (combined sintered flux) having a basicity of 1.5 to 4.0.

Here, the basicity (BA) of the sintered flux in the material for submerged arc welding according to the embodiment is defined by the formula (1) below. Note that the amount of each component in the formula (1) is the amount of the component in percent by mass.

$$\text{Basicity (BA)} = [CaO + MgO + CaF_2 + BaO + 0.5 \times (MnO + FeO)]/[SiO_2 + 0.5 \times (Al_2O_3 + TiO_2 + ZrO_2)] \qquad (1)$$

When the basicity of the sintered flux is 1.5 or more, the amount of oxygen in the weld metal is sufficiently reduced, and excellent toughness is easily secured, which is preferable. The basicity of the sintered flux is more preferably 2.0 or more. Furthermore, when the basicity of the sintered flux is 4.0 or less, the arc is stabilized, a good bead shape can be obtained, and good welding workability is easily secured, which is preferable. The basicity of the sintered flux is more preferably 3.6 or less.

EXAMPLES

The present invention will be described in detail with reference to examples and comparative examples. However, it is to be understood that the present invention is not limited thereto.

Tables 1 and 2 below show chemical compositions (mass%) of flux-cored wires used in the present tests. Regarding the chemical composition relative to the total mass of the wire, the balance includes Fe and unavoidable impurities. Furthermore, regarding the amount of each of the components Mg, Cr, Mo, and Cu, "-" indicates that the amount of each component is at a level equal to or lower than the impurity level. Furthermore, the amount of each of the components N and O is the content in the steel sheath (relative to the total mass of the steel sheath).

Furthermore, Table 3 below shows chemical compositions (mass%) of sintered fluxes (combined sintered fluxes) used in the present tests. Note that the basicity (BA) of the sintered flux is calculated by the formula (1) below. The amount of each component in the formula (1) is the amount of the component in percent by mass.

$$\text{Basicity (BA)} = [CaO + MgO + CaF_2 + BaO + 0.5 \times (MnO + FeO)]/[SiO_2 + 0.5 \times (Al_2O_3 + TiO_2 + ZrO_2)] \qquad (1)$$

In order to test welding workability and mechanical properties of a weld metal, a welding test was carried out under the welding conditions shown in Table 5, in which a steel sheet 1 (thickness: 25 mm) having the chemical composition (the balance being Fe and unavoidable impurities) shown in Table 4 was formed into a groove shape with a groove angle of 30° and a root gap of 13 mm, followed by providing a backing material 2 thereunder, as shown in Fig. 1, and each of the flux-cored wires and each of the sintered fluxes were combined for use as shown in Tables 6 and 7.

(Tensile test)

A tensile test specimen type A1 of JIS Z 3111: 2005 was taken from each of the obtained weld metals at a position 9.5 mm below the surface of the steel sheet, and the tensile strength (TS) of the weld metal was measured by a tensile test according to the "Methods of tension and impact tests for deposited metal" stipulated in JIS Z 3111: 2005. The results are shown in Tables 6 and 7. Here, when the tensile strength (TS) is 570 MPa or more, the test specimen can be evaluated as having high strength.

(Impact test)

A 2-mm V-notch impact test specimen of JIS Z 3111: 2005 was taken from each of the obtained weld metals at a position 9.5 mm below the surface of the steel sheet, and the absorbed energy at -90°C (vE-90°C) of the weld metal was measured by an impact test according to "Methods of tension and impact tests for deposited metal" stipulated in JIS Z 3111: 2005. The results are shown in Tables 6 and 7. Here, when the absorbed energy at -90°C (vE-90°C) is 75 J or more, the test specimen can be evaluated as having good low-temperature toughness.

(Amount of oxygen in weld metal)

The amount of oxygen in the weld metal was measured in accordance with JIS G 1239: 2014. The results are shown in Tables 6 and 7.

(Amount of diffusible hydrogen in weld metal)

The amount of diffusible hydrogen in the weld metal was evaluated by a method according to JIS Z 3118: 2007. The results are shown in Tables 6 and 7. Here, an amount of diffusible hydrogen ([H]d) of 5.0 ml/100 g or less was regarded as "pass".

(Welding workability)

Regarding each example, welding workability was evaluated from the standpoint of the bead wettability, bead shape, arc stability, presence or absence of blowholes, removability of slag, and the like.

[Table 1]

Table 1

| Classification | Wire symbol | Content relative to total mass of wire (mass%) | | | | | | | | | | | Content in steel sheath (mass%) | |
|---|---|---|---|---|---|---|---|---|---|---|---|---|---|---|
| | | C | Si | Mn | Ni | Ti | B | CaF$_2$ | Mg | Cr | Mo | Cu | N | O |
| Example | W-1 | 0.15 | 0.08 | 0.89 | 1.8 | 0.09 | 0.006 | 1.7 | - | - | - | - | 0.0042 | 0.0035 |
| | W-2 | 0.04 | 0.35 | 1.49 | 2.5 | 0.16 | 0.011 | 2.1 | - | - | - | - | 0.0042 | 0.0035 |
| | W-3 | 0.08 | 0.49 | 1.03 | 2.0 | 0.09 | 0.011 | 1.5 | - | - | - | - | 0.0042 | 0.0035 |
| | W-4 | 0.11 | 0.05 | 1.21 | 2.3 | 0.20 | 0.010 | 2.1 | - | - | - | - | 0.0042 | 0.0035 |
| | W-5 | 0.05 | 0.26 | 1.98 | 2.0 | 0.09 | 0.008 | 1.5 | - | - | - | - | 0.0044 | 0.0043 |
| | W-6 | 0.08 | 0.25 | 0.80 | 3.2 | 0.15 | 0.011 | 2.1 | - | - | - | - | 0.0044 | 0.0043 |
| | W-7 | 0.08 | 0.23 | 0.94 | 2.1 | 0.11 | 0.009 | 1.4 | - | - | - | - | 0.0041 | 0.0039 |
| | W-8 | 0.08 | 0.21 | 1.14 | 3.9 | 0.09 | 0.010 | 1.7 | - | - | - | - | 0.0041 | 0.0039 |
| | W-9 | 0.10 | 0.41 | 1.26 | 1.5 | 0.15 | 0.010 | 2.1 | - | - | - | - | 0.0041 | 0.0039 |
| | W-10 | 0.10 | 0.12 | 1.19 | 2.0 | 0.30 | 0.013 | 2.1 | - | - | - | - | 0.0041 | 0.0039 |
| | W-11 | 0.08 | 0.12 | 1.51 | 3.0 | 0.05 | 0.008 | 2.2 | - | - | - | - | 0.0041 | 0.0039 |
| | W-12 | 0.08 | 0.12 | 1.28 | 2.3 | 0.21 | 0.015 | 1.5 | - | - | - | - | 0.0041 | 0.0039 |
| | W-13 | 0.09 | 0.21 | 1.50 | 2.4 | 0.09 | 0.003 | 2.1 | - | - | - | - | 0.0041 | 0.0039 |
| | W-14 | 0.12 | 0.10 | 0.91 | 2.3 | 0.20 | 0.010 | 2.5 | - | - | - | - | 0.0044 | 0.0043 |
| | W-15 | 0.08 | 0.12 | 1.52 | 3.1 | 0.23 | 0.012 | 0.8 | - | - | - | - | 0.0044 | 0.0043 |
| | W-16 | 0.09 | 0.16 | 1.05 | 2.3 | 0.11 | 0.010 | 1.2 | 1.0 | - | - | - | 0.0045 | 0.0054 |
| | W-17 | 0.11 | 0.23 | 1.32 | 2.0 | 0.11 | 0.011 | 2.3 | - | - | - | - | 0.0050 | 0.0065 |
| | W-18 | 0.06 | 0.10 | 0.94 | 2.2 | 0.09 | 0.010 | 2.1 | - | 1.0 | - | - | 0.0042 | 0.0035 |
| | W-19 | 0.05 | 0.10 | 1.10 | 2.1 | 0.11 | 0.012 | 1.9 | - | - | 1.0 | - | 0.0042 | 0.0035 |
| | W-20 | 0.05 | 0.09 | 1.13 | 1.5 | 0.09 | 0.010 | 2.3 | - | - | - | 1.0 | 0.0042 | 0.0035 |

EP 3 702 095 A1

[Table 2]

Table 2

| Classification | Wire symbol | Content relative to total mass of wire (mass%) | | | | | | | | | | | Content in steel sheath (mass%) | |
| --- | --- | --- | --- | --- | --- | --- | --- | --- | --- | --- | --- | --- | --- | --- |
| | | C | Si | Mn | Ni | Ti | B | CaF$_2$ | Mg | Cr | Mo | Cu | N | O |
| Comparative Example | W-21 | 0.16 | 0.08 | 1.02 | 1.8 | 0.09 | 0.006 | 1.7 | - | - | - | - | 0.0045 | 0.0054 |
| | W-22 | 0.02 | 0.15 | 1.35 | 2.2 | 0.14 | 0.010 | 2.0 | - | - | - | - | 0.0045 | 0.0054 |
| | W-23 | 0.10 | 0.52 | 1.12 | 2.3 | 0.19 | 0.012 | 1.8 | - | - | - | - | 0.0042 | 0.0038 |
| | W-24 | 0.09 | 0.04 | 1.26 | 2.8 | 0.22 | 0.012 | 1.8 | - | - | - | - | 0.0045 | 0.0041 |
| | W-25 | 0.09 | 0.21 | 2.01 | 2.1 | 0.15 | 0.010 | 1.9 | - | - | - | - | 0.0045 | 0.0042 |
| | W-26 | 0.08 | 0.23 | 0.78 | 2.1 | 0.14 | 0.009 | 2.1 | - | - | - | - | 0.0042 | 0.0047 |
| | W-27 | 0.10 | 0.19 | 1.20 | 4.1 | 0.25 | 0.012 | 1.7 | - | - | - | - | 0.0042 | 0.0039 |
| | W-28 | 0.08 | 0.28 | 1.18 | 1.4 | 0.11 | 0.012 | 2.0 | - | - | - | - | 0.0043 | 0.0042 |
| | W-29 | 0.11 | 0.15 | 1.26 | 2.2 | 0.31 | 0.012 | 2.0 | - | - | - | - | 0.0043 | 0.0047 |
| | W-30 | 0.10 | 0.15 | 1.15 | 2.8 | 0.04 | 0.008 | 1.9 | - | - | - | - | 0.0042 | 0.0044 |
| | W-31 | 0.11 | 0.32 | 1.33 | 2.1 | 0.20 | 0.016 | 1.7 | - | - | - | - | 0.0042 | 0.0051 |
| | W-32 | 0.08 | 0.25 | 1.16 | 3.1 | 0.10 | 0.002 | 1.1 | - | - | - | - | 0.0042 | 0.0037 |
| | W-33 | 0.08 | 0.20 | 1.35 | 3.0 | 0.21 | 0.010 | 2.6 | - | - | - | - | 0.0043 | 0.0039 |
| | W-34 | 0.09 | 0.15 | 1.29 | 2.7 | 0.19 | 0.011 | 0.7 | - | - | - | - | 0.0041 | 0.0044 |
| | W-35 | 0.10 | 0.14 | 1.08 | 2.3 | 0.11 | 0.010 | 1.2 | 1.1 | - | - | - | 0.0045 | 0.0054 |
| | W-36 | 0.11 | 0.21 | 1.22 | 2.0 | 0.11 | 0.012 | 2.3 | - | - | - | - | 0.0067 | 0.0060 |
| | W-37 | 0.09 | 0.18 | 1.08 | 2.3 | 0.11 | 0.01 | 2.3 | - | - | - | - | 0.0044 | 0.0098 |

[Table 3]

Table 3

| Flux symbol | Chemical composition of sintered flux (mass%) | | | | | | | | | | | Basicity |
|---|---|---|---|---|---|---|---|---|---|---|---|---|
| | CaO | MgO | CaF$_2$ | BaO | MnO | FeO | S$_1$O$_2$ | Al$_2$O$_3$ | TiO$_2$ | ZrO$_2$ | Others | |
| F-1 | 12 | 27 | 16 | - | - | - | 17 | 20 | - | - | 8 | 2.04 |
| F-2 | 23 | 32 | 13 | - | - | - | 10 | 15 | - | - | 7 | 3.89 |
| F-3 | 12 | 22 | 13 | 2 | 1 | 2 | 22 | 15 | 4 | 1 | 6 | 1.58 |

[Table 4]

Table 4

| Chemical composition of steel sheet (mass%) | | | | |
|---|---|---|---|---|
| C | Si | Mn | P | S |
| 0.13 | 0.34 | 1.34 | 0.010 | 0.003 |

[Table 5]

Table 5

| Wire diameter (mm) | Polarity | Welding position | Current (A) | Voltage (V) | Welding speed (cm/min.) | Heat input (kJ/cm) | Preheating temperature (°C) | Interpass temperature (°C) | Wire extension (mm) |
|---|---|---|---|---|---|---|---|---|---|
| 4.0 | AC | Flat | 550 | 30 | 40 | 24.8 | 90-110 | 140-160 | 30 |

[Table 6]

Table 6

| Classification | Wire symbol | Flux symbol | Weld metal symbol | Room temperature TS (MPa) | vE-90°C (J) | Amount of oxygen in weld metal (ppm) | Amount of diffusible hydrogen in weld metal (ml/100g) | Welding workability | Comprehensive evaluation |
|---|---|---|---|---|---|---|---|---|---|
| Example | W-1 | F-1 | D-1 | 672 | 81 | 220 | 2.9 | Good | ○ |
| | W-2 | F-2 | D-2 | 575 | 115 | 204 | 3.1 | Good | ○ |
| | W-3 | F-1 | D-3 | 627 | 91 | 254 | 3.0 | Good | ○ |
| | W-4 | F-2 | D-4 | 651 | 122 | 210 | 2.7 | Good | ○ |
| | W-5 | F-3 | D-5 | 614 | 91 | 241 | 3.5 | Good | ○ |
| | W-6 | F-2 | D-6 | 620 | 124 | 209 | 2.5 | Good | ○ |
| | W-7 | F-2 | D-7 | 581 | 121 | 205 | 3.0 | Good | ○ |
| | W-8 | F-2 | D-8 | 651 | 119 | 238 | 2.3 | Good | ○ |
| | W-9 | F-2 | D-9 | 660 | 83 | 193 | 2.6 | Good | ○ |
| | W-10 | F-3 | D-10 | 623 | 105 | 189 | 3.3 | Good | ○ |
| | W-11 | F-3 | D-11 | 632 | 99 | 198 | 3.6 | Good | ○ |
| | W-12 | F-3 | D-12 | 619 | 121 | 217 | 3.1 | Good | ○ |
| | W-13 | F-3 | D-13 | 639 | 87 | 188 | 3.9 | Good | ○ |
| | W-14 | F-1 | D-14 | 645 | 132 | 179 | 3.8 | Good | ○ |
| | W-15 | F-1 | D-15 | 637 | 102 | 250 | 2.7 | Good | ○ |
| | W-16 | F-1 | D-16 | 646 | 136 | 172 | 4.8 | Good | ○ |
| | W-17 | F-1 | D-17 | 613 | 79 | 195 | 3.1 | Good | ○ |
| | W-18 | F-2 | D-18 | 632 | 97 | 206 | 3.7 | Good | ○ |
| | W-19 | F-2 | D-19 | 651 | 91 | 211 | 3.4 | Good | ○ |
| | W-20 | F-2 | D-20 | 605 | 112 | 208 | 3.9 | Good | ○ |

[Table 7]

Table 7

| Classification | Wire symbol | Flux symbol | Weld metal symbol | Room temperature TS (MPa) | vE-90°C (J) | Amount of oxygen in weld metal (ppm) | Amount of diffusible hydrogen in weld metal (ml/100g) | Welding workability | Comprehensive evaluation |
|---|---|---|---|---|---|---|---|---|---|
| Comparative Example | W-21 | F-1 | D-21 | 701 | 52 | 225 | 2.8 | Good | × |
| | W-22 | F-2 | D-22 | 534 | 77 | 249 | 2.9 | Good | × |
| | W-23 | F-1 | D-23 | 610 | 34 | 236 | 2.5 | Good | × |
| | W-24 | F-2 | D-24 | - | - | - | - | × Deterioration of bead wetting at groove edges | × |
| | W-25 | F-3 | D-25 | 703 | 70 | 217 | 3.2 | Good | × |
| | W-26 | F-2 | D-26 | 599 | 64 | 261 | 3.4 | Good | × |
| | W-27 | F-2 | D-27 | 710 | 55 | 220 | 2.9 | Good | × |
| | W-28 | F-2 | D-28 | 599 | 48 | 228 | 2.9 | Good | × |
| | W-29 | F-3 | D-29 | 699 | 35 | 218 | 3.1 | Good | × |
| | W-30 | F-3 | D-30 | 650 | 65 | 254 | 3.3 | Good | × |
| | W-31 | F-3 | D-31 | 702 | 40 | 230 | 3.4 | Good | × |
| | W-32 | F-3 | D-32 | 611 | 37 | 227 | 3.7 | Good | × |
| | W-33 | F-1 | D-33 | - | - | - | - | × Unstable arc and poor bead shape | × |
| | W-34 | F-1 | D-34 | 612 | 69 | 310 | 4.0 | Good | × |
| | W-35 | F-1 | D-35 | 661 | 129 | 161 | 5.2 | Good | × |
| | W-36 | F-1 | D-36 | 664 | 61 | 255 | 3.5 | × Generation of bubbles | × |
| | W-37 | F-1 | D-37 | 659 | 65 | 298 | - | Good | × |

In each of the examples using wires W-1 to W-20, which are Examples, it was possible to obtain a weld metal having high strength with a room temperature tensile strength (TS) of 570 MPa or more and excellent low-temperature toughness with an absorbed energy at -90°C (vE-90°C) of 75 J or more with good welding workability. Furthermore, the amount of diffusible hydrogen in the resulting weld metal was able to be suppressed to 5.0 ml/100 g or less.

On the other hand, in the example using wire W-21, since the amount of C in the wire was excessively large, the absorbed energy at -90°C (vE-90°C) was low.

Furthermore, in the example using wire W-22, since the amount of C in the wire was excessively small, the room temperature tensile strength (TS) was low.

In the example using wire W-23, since the amount of Si in the wire was excessively large, the absorbed energy at -90°C (vE-90°C) was low.

Furthermore, in the example using wire W-24, since the amount of Si in the wire was excessively small, bead wetting at groove edges deteriorated. In this example, since good welding workability was not obtained, measurement of the room temperature tensile strength (TS), the absorbed energy at -90°C (vE-90°C), and the amount of oxygen and the amount of diffusible hydrogen in the weld metal was not performed.

In the example using wire W-25, since the amount of Mn in the wire was excessively large, the absorbed energy at -90°C (vE-90°C) was low.

Furthermore, in the example using wire W-26, since the amount of Mn in the wire was excessively small, the absorbed energy at -90°C (vE-90°C) was low.

In the example using wire W-27, since the amount of Ni in the wire was excessively large, the absorbed energy at -90°C (vE-90°C) was low.

Furthermore, in the example using wire W-28, since the amount of Ni in the wire was excessively small, the absorbed energy at -90°C (vE-90°C) was low.

In the example using wire W-29, since the amount of Ti in the wire was excessively large, the absorbed energy at -90°C (vE-90°C) was low.

Furthermore, in the example using wire W-30, since the amount of Ti in wire was excessively small, the absorbed energy at -90°C (vE-90°C) was low.

In the example using wire W-31, since the amount of B in the wire was excessively large, the absorbed energy at -90°C (vE-90°C) was low.

Furthermore, in the example using wire W-32, since the amount of B in the wire was excessively small, the absorbed energy at -90°C (vE-90°C) was low.

In the example using wire W-33, since the amount of $CaF_2$ in the wire was excessively large, the arc became unstable and the bead shape was poor. In this example, since good welding workability was not obtained, measurement of the room temperature tensile strength (TS), the absorbed energy at -90°C (vE-90°C), and the amount of oxygen and the amount of diffusible hydrogen in the weld metal was not performed.

Furthermore, in the example using wire W-34, since the amount of $CaF_2$ in the wire was excessively small, the absorbed energy at -90°C (vE-90°C) was low.

In the example using wire W-35, since the amount of Mg in the wire was excessively large, the amount of diffusible hydrogen in the weld metal was not able to be suppressed to a low level.

In the example using wire W-36, since the amount of N in the steel sheath of the wire was excessively large, the absorbed energy at -90°C (vE-90°C) was low, and bubbles were generated in the weld metal, thus deteriorating welding workability.

In the example using wire W-37, since the amount of O in the steel sheath of the wire was excessively large, the absorbed energy at -90°C (vE-90°C) was low. In this example, the amount of diffusible hydrogen in the weld metal was not measured.

The present invention has been described in detail based on the specific examples. However, the present invention is not limited to the specific examples, and various modifications and changes are possible without departing from the category of the present invention.

While the present invention has been described in detail with reference to the specific embodiments, it will be apparent to one skilled in the art that various changes and alterations can be made therein without departing from the spirit and scope of the present invention. The present application is based on Japanese Patent Application (No. 2017-206521) filed on October 25, 2017, the entire contents of which are incorporated herein by reference. Furthermore, all the references cited herein are incorporated as a whole.

Reference Signs List

1    steel sheet

2   backing material

**Claims**

1. A flux-cored wire for submerged arc welding in which a steel sheath is filled with a flux, the flux-cored wire comprising, relative to a total mass of the wire:

   C: 0.03 to 0.15% by mass;
   Si: 0.05 to 0.50% by mass;
   Mn: 0.80 to 2.00% by mass;
   Ni: 1.5 to 4.0% by mass;
   Ti: 0.05 to 0.30% by mass;
   B: 0.003 to 0.015% by mass;
   $CaF_2$: 0.8 to 2.5% by mass; and
   Mg: 1.0% by mass or less (including 0% by mass),
   wherein the amount of N and the amount of O in the steel sheath are controlled to N: 0.0050% by mass or less and O: 0.0075% by mass or less, respectively.

2. The flux-cored wire for submerged arc welding according to Claim 1, further comprising, relative to the total mass of the wire, at least one selected from the group consisting of Cr: 1.5% by mass or less (including 0% by mass), Mo: 1.5% by mass or less (including 0% by mass), and Cu: 1.5% by mass or less (including 0% by mass).

3. A material for submerged arc welding comprising:

   the flux-cored wire for submerged arc welding according to Claim 1 or 2; and
   a sintered flux having a basicity of 1.5 to 4.0.

# FIG. 1

**INTERNATIONAL SEARCH REPORT**

| International application No. |
| --- |
| PCT/JP2018/039568 |

| A. CLASSIFICATION OF SUBJECT MATTER |
| --- |
| Int.Cl. B23K35/368(2006.01)i, B23K35/30(2006.01)i, B23K35/362(2006.01)i, C22C38/00(2006.01)n, C22C38/04(2006.01)n |

According to International Patent Classification (IPC) or to both national classification and IPC

| B. FIELDS SEARCHED |
| --- |
| Minimum documentation searched (classification system followed by classification symbols)<br>Int.Cl. B23K35/368, B23K35/30, B23K35/362, C22C38/00, C22C38/04 |

| Documentation searched other than minimum documentation to the extent that such documents are included in the fields searched |
| --- |
| Published examined utility model applications of Japan 1922–1996<br>Published unexamined utility model applications of Japan 1971–2019<br>Registered utility model specifications of Japan 1996–2019<br>Published registered utility model applications of Japan 1994–2019 |

| Electronic data base consulted during the international search (name of data base and, where practicable, search terms used) |
| --- |
| |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2009-131870 A (NIPPON STEEL & SUMIKIN WELDING CO., LTD.) 18 June 2009 & EP 2067566 A1 | 1-3 |
| A | JP 2008-105036 A (NIPPON STEEL & SUMIKIN WELDING CO., LTD.) 08 May 2008 (Family: none) | 1-3 |
| A | JP 2009-50866 A (NIPPON STEEL CORP.) 12 March 2009 (Family: none) | 1-3 |
| A | JP 2008-87043 A (KOBE STEEL, LTD.) 17 April 2008 & CN 101157164 A & SE 702122 A & SG 141332 A1 & KR 10-2008-0030936 A & NL 1034459 A1 & NO 20074783 A | 1-3 |

☐ Further documents are listed in the continuation of Box C.　　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 January 2019 (15.01.2019) | 22 January 2019 (22.01.2019) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5462147 B

- JP 2017206521 A